# EUROPÄISCHE PATENTSCHRIFT

(11) **EP 0 907 925 B1**
(45) Veröffentlichungstag und Bekanntmachung des Hinweises auf die Patenterteilung: **31.05.2000**
(21) Anmeldenummer: 97931668.4
(22) Anmeldetag: 23.06.1997
(51) Int. Cl.: G06F 17/60, G07F 7/10

(54) **KOMMUNIKATIONSSYSTEM ZUR ÜBERTRAGUNG VON BUCHUNGSBEFEHLEN**
COMMUNICATION SYSTEM FOR TRANSMITTING ACCOUNTING INSTRUCTIONS
SYSTEME DE COMMUNICATION UTILISE POUR TRANSMETTRE DES ORDRES COMPTABLES

(30) Priorität: 27.06.1996 DE 19627308; 27.06.1996 DE 19627307
(43) Veröffentlichungstag der Anmeldung: 14.04.1999
(73) Patentinhaber: MANNESMANN Aktiengesellschaft, 40213 Düsseldorf (DE)
(72) Erfinder: MIHATSCH, Peter, D-71069 Sindelfingen (DE)
(74) Vertreter: Presting, Hans-Joachim, Dipl.-Ing.
(86) Internationale Anmeldenummer: DE9701341
(87) Internationale Veröffentlichungsnummer: WO9800802

(56) Entgegenhaltungen:
- EP-A- 0 416 482
- WO-A-96/13814
- DE-A- 4 330 254
- DE-A- 4 426 428

## Beschreibung

Die Erfindung betrifft ein Kommunikationssystem zur Übertragung von Buchungsbefehlen nach dem Oberbegriff des Patentanspruchs 1.

Derartige Kommunikationssysteme sind durch offenkundige Vorbenutzung bekannt.

Dazu ist eine Vielzahl von geldwerten Chipkarten, wie Telefonkarten, Kundenkarten, Kreditkarten usw. im Umlauf, die durch temporäres Einfügen in eine von einer zentralen Buchungseinrichtung örtlich abgesetzten dezentralen Einrichtung zur Bezahlung einer Ware oder Dienstleistung geeignet sind. Nachteiligerweise sind diese geldwerten Chipkarten regelmäßig von enger Zweckbindung, beispielsweise sind Telefonkarten ausschließlich zum Telefonieren unter Nutzung von Endgeräten eines einzigen Telefonuntemehmens geeignet, und in Verbindung mit dezentralen Einrichtungen unterschiedlichen Komforts benutzbar. Darüber hinaus ist das Abhandenkommen einer derartigen geldwerten Chipkarte regelmäßig von monetärem Verlust begleitet. Weiterhin unterliegen diese Chipkarten aus Haftungsgründen betragsgemäßen Wertbeschränkungen, die ihre Brauchbarkeit weitgehend limitieren.

Die WO 96/13814 offenbart ein Kommunikationssystem zur Übertragung von Buchungsbefehlen, bei welchem Buchungsbefehle von einem Mobilfunkgerät über ein Mobilfunk-Kommunikationssystem und ein Festnetz, wie PSTN-ISDN, an Buchungs-befehl-Empfänger, wie ein Restaurant oder eine Bank, übermittelt werden können.

Darüber hinaus ist unter dem Begriff des sogenannten "Homebanking" ein Kommunikationssystem zur Übertragung von Buchungsbefehlen bekanntgeworden, bei dem der Benutzer dieses System unter Verwendung eines Personalcomputers mit Modem über eine Telefonverbindung Buchungsbefehle an eine zentrale Buchungseinrichtung über-trägt. Die dazu erforderlichen technischen Einrichtungen sind nur eingeschränkt transportabel. Außerdem ermangelt es diesem Verfahren an der Möglichkeit der Barauszahlung. Weiterhin sind die Vorkehrungen zum Schutz gegen unlegitimierte Zugriffe zumindest lückenhaft.

Der Erfindung liegt daher die Aufgabe zugrunde, ein Kommunikationssystem der gattungsgemäßen Art anzugeben, das einen komfortablen Zugriff bei höchstmöglicher Sicherheit gegen unlegitimierten Zugriff sowie eine breite Akzeptanz ermöglicht.

Erfindungsgemäß wird diese Aufgabe in einer ersten Variante mit den Mitteln des Patentanspruchs 1 gelöst. Vorteilhafte Ausgestaltungen der ersten Variante der Erfindung sind in den Patentansprüchen 2 bis 6 beschrieben.

Die Erfindung geht dabei von einem für sich bekannten Kommunikationssystem zur Übertragung von Buchungsbefehlen aus, das untereinander zumindest virtuell vernetzte, zentrale und dezentrale Einrichtungen umfaßt, wobei die an den dezentralen Einrichtungen eingebbaren, nutzerindividuellen Buchungsbefehle auf ihre Legitimation geprüft und an zentrale Einrichtungen zur Verarbeitung weitergeleitet werden.

Der Kern der Erfindung besteht darin, daß ein unabhängiges zweites Kommunikationssystem vorgesehen ist, das aus ortsfesten Einrichtungen und mit diesen verschlüsselt kommunizierenden, tragbaren Kommunikationsendeinrichtungen besteht. Dabei sind die ortsfesten Einrichtungen des zweiten Kommunikationssystems mit den zentralen Einrichtungen des Kommunikationssystems zur Übertragung von Buchungsbefehlen zumindest temporär verbindbar. Mit den tragbaren Kommunikationsendeinrichtungen des zweiten Kommunikationssystems sind nutzerindividuelle Buchungsbefehle in einer der zentralen Einrichtungen des Kommunikationssystems zur Übertragung von Buchungsbefehlen vorlegitimierbar. Weiterhin ist vorgesehen, daß ein vorlegitimierter, verschlüsselter Buchungscode zumindest temporär in der tragbaren Kommunikationsendeinrichtung des zweiten Kommunikationssystems speicherbar ist und daß der vorlegitimierte verschlüsselte Buchungscode unabhängig vom ersten und vom zweiten Kommunikationssystem zur tatsächlichen Buchung an eine dezentrale Einrichtung des ersten Kommunikationssystems übertragbar ist.

Ein durch einen Nutzer initiierter Buchungsbefehl wird mit den Mitteln der tragbaren Kommunikationsendeinrichtung des zweiten Kommunikationssystems eingegeben. Dazu ist die tragbare Kommunikationsendeinrichtung mit einer Tastatur und vorzugsweise einer Anzeigevorrichtung ausgestattet. Der Buchungsbefehl wird innerhalb des zweiten Kommunikationssystems mit der dem zweiten Kommunikationssystem immanenten Verschlüsselung zu einer ortsfesten Einrichtung des zweiten Kommunikationssystems übertragen und an eine zentrale Einrichtung des Kommunikationssystems zur Übertragung von Buchungsbefehlen weitergeleitet.

Der Zugang des Nutzers zur Diensten des zweiten Kommunikationssystems ist durch einen mehrstufigen Identifizierungsprozeß gegen unlegitimierte Zugriffe abgesichert. Dazu werden seitens der ortsfesten Einrichtungen des zweiten Kommunikationssystems die Endgerätenummer der tragbaren Kommunikationsendeinrichtung, die Teilnehmernummer des Nutzers, die auf einem wechselbaren Modul innerhalb der tragbaren Kommunikationsendeinrichtung gespeichert ist, und die persönliche Identifikationsnummer des Nutzers abgefragt. Infolge dieses mehrstufigen Indentifizierungsprozesses gilt der unlegitimierte Zugang zum zweiten Kommunikationssystem bei bestimmungsgemäßem Gebrauch als ausgeschlossen. Vorzugsweise ist das zweite Kommunikationssystem ein Mobilkommunikationssystem auf der Basis des GSM-Standards.

Vorteilhafterweise wird bei höchstmöglicher Sicherheit gegen unlegitimierte Zugriffe ein hoher Grad an Komfort realisiert, da bekannte tragbare Kommunikationsendeinrichtungen so geringe Volumina aufweisen, daß sie ständig mitgeführt werden können.

Als zusätzlicher positiver Effekt ist anzusehen, daß mit einem einzigen mitzuführenden Gerät, das zum Zwecke der verbalen und Daten-Kommunikation ohnehin bereits eine weite Verbreitung gefunden hat, ergänzend Buchungsgeschäfte durchführbar sind.

Erfindungsgemäß wird diese Aufgabe in einer zweiten Variante mit den Mitteln des Patentanspruchs 7 gelöst. Vorteilhafte Ausgestaltungen der zweiten Variante der Erfindung sind in den Patentansprüchen 8 bis 12 beschrieben.

Die Erfindung geht dabei von einem für sich bekannten Kommunikationssystem zur Übertragung von Buchungsbefehlen aus, das untereinander zumindest virtuell vernetzte, zentrale und dezentrale Einrichtungen umfaßt, wobei die an den dezentralen Einrichtungen eingebbaren, nutzerindividuellen Buchungsbefehle auf ihre Legitimation geprüft und an zentrale Einrichtungen zur Verarbeitung weitergeleitet werden.

Der Kern der Erfindung besteht darin, daß ein unabhängiges zweites Kommunikationssystem vorgesehen ist, das aus ortsfesten Einrichtungen und mit diesen verschlüsselt kommunizierenden, tragbaren Kommunikationsendeinrichtungen besteht. Dabei sind die ortsfesten Einrichtungen des zweiten Kommunikationssystems mit den zentralen Einrichtungen des Kommunikationssystems zur Übertragung von Buchungsbefehlen zumindest temporär verbindbar. Mit den tragbaren Kommunikationsendeinrichtungen des zweiten Kommunikationssystems sind nutzerindividuelle Buchungsbefehle in einer der dezentralen Einrichtungen des Kommunikationssystems zur Übertragung von Buchungsbefehlen legitimiert initiierbar. Dabei erfolgt die Legitimation des Nutzers während seines Zuganges zum zweiten Kommunikationssystem.

Der Zugang des Nutzers zur Diensten des zweiten Kommunikationssystems ist durch einen mehrstufigen Identifizierungsprozeß gegen unlegitimierte Zugriffe abgesichert. Dazu werden seitens der ortsfesten Einrichtungen des zweiten Kommunikationssystems die Endgerätenummer der tragbaren Kommunikationsendeinrichtung, die Teilnehmernummer des Nutzers, die auf einem wechselbaren Modul innerhalb der tragbaren Kommunikationsendeinrichtung gespeichert ist, und die persönliche Identifikationsnummer des Nutzers abgefragt. Infolge dieses mehrstufigen Indentifizierungsprozesses gilt der unlegitimierte Zugang zum zweiten Kommunikationssystem bei bestimmungsgemäßem Gebrauch als ausgeschlossen. Vorzugsweise ist das zweite Kommunikationssystem ein Mobilkommunikationssystem auf der Basis des GSM-Standards.

Vorteilhafterweise ist eine darüber hinausgehende Legitimation verzichtbar.

Weiterhin ist vorgesehen, daß die initiierten und legitimierten Buchungsbefehle als Buchungscode ausgehend von der dezentralen Einrichtungen des ersten Kommunikationssystems über die tragbare Kommunikationsendeinrichtung des zweiten Kommunikationssystems zumindest an eine ortsfeste Einrichtung des zweiten Kommunikationssystems übertragbarbar sind. Von dieser ortsfesten Einrichtung sind die Buchungscodes zur tatsächlichen Buchung an die zentrale Einrichtung des ersten Kommunikationssystems übertragbar.

Dabei ist vorteilhafterweise eine Vernetzung der zentralen und dezentralen Einrichtungen des ersten Kommunikationssystems verzichtbar.

Ein durch einen Nutzer initiierter Buchungsbefehl wird mit den Mitteln der tragbaren Kommunikationsendeinrichtung des zweiten Kommunikationssystems eingegeben. Dazu ist die tragbare Kommunikationsendeinrichtung mit einer Tastatur und vorzugsweise einer Anzeigevorrichtung ausgestattet. Der Buchungsbefehl wird innerhalb der dezentralen Einrichtung des des Kommunikationssystems zur Übertragung von Buchungsbefehlen in einen Buchungscode umgesetzt, der über Einrichtungen des zweiten Kommunikationssystems verschlüsselt übertragen wird.

Die Buchungscodes sind in einer ortsfesten Einrichtung saldierbar und zusammen mit der nutzerindividuellen Abrechnung für die Inanspruchnahme der Dienste des zweiten Kommunikationssystems gegenüber dem Nutzer abrechenbar. Dabei wird als vorteilhaft angesehen, daß der Nutzer periodisch nur noch eine einzige gesamtheitliche Abrechnung zur Kenntnisnahme und Prüfung sowohl für die Inanspruchnahme der Dienste des zweiten Kommunikationssystems als auch für den Bezug von Waren und Dienstleistungen an bzw. aus dezentralen Einrichtungen des Kommunikationssystems zur Übertragung von Buchungsbefehlen erhält.

Vorteilhafterweise wird darüber hinaus bei höchstmöglicher Sicherheit gegen unlegitimierte Zugriffe ein hoher Grad an Komfort realisiert, da bekannte tragbare Kommunikationsendeinrichtungen so geringe Volumina aufweisen, daß sie ständig mitgeführt werden können.

Als zusätzlicher positiver Effekt ist anzusehen, daß mit einem einzigen mitzuführenden Gerät, das zum Zwecke der verbalen und Daten-Kommunikation ohnehin bereits eine weite Verbreitung gefunden hat, ergänzend Buchungsgeschäfte durchführbar sind.

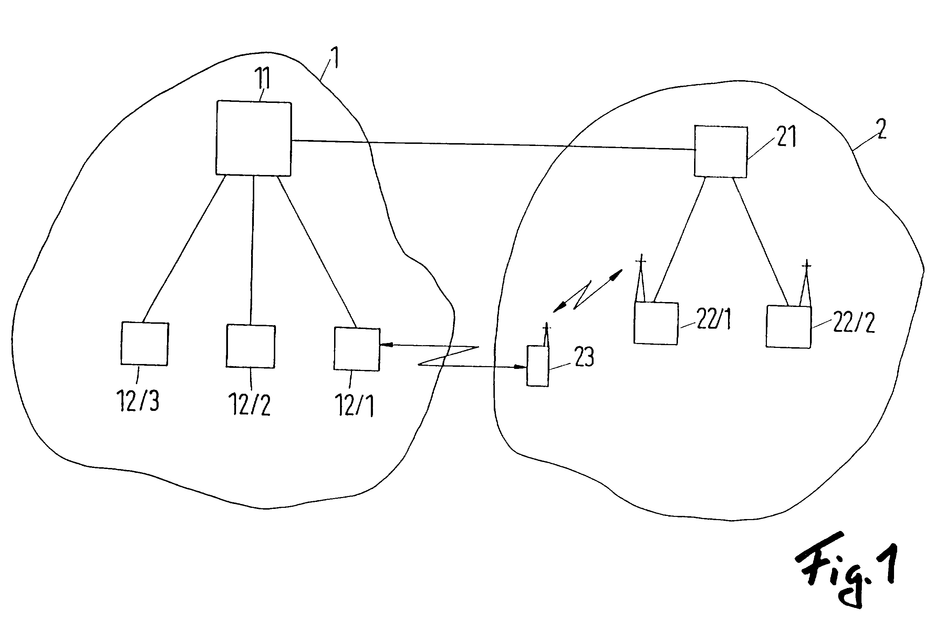

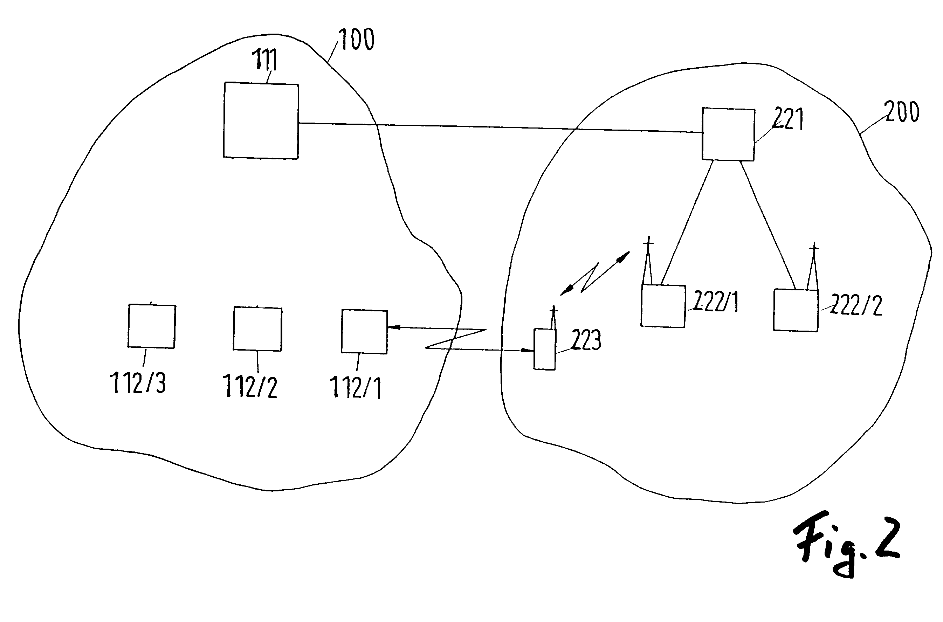

Die Erfindung wird nachstehend für beide Varianten anhand jeweils eines Ausführungsbeispiels mittels der Figuren 1 und 2 unter Berücksichtigung von vorteilhaften Ausgestaltungen näher erläutert.

In der Figur 1 sind ein Kommunikationssystem 1 zur Übertragung von Buchungsbefehlen mit einer zentralen Einrichtung 11 und drei dezentralen Einrichtungen 12/1 bis 12/3 dargestellt, die derart miteinander vernetzt sind, daß jede dezentrale Einrichtung 12/1 bis 12/3 mit der zentralen Einrichtung 11 verbunden ist. Diese Verbindung kann dauerhaft oder auch auf Anforderung temporär geschaltet sein.

Weiterhin ist ein zweites Kommunikationssystem 2 mit ortsfesten Einrichtungen 21, 22/1 und 22/2 und tragbaren Kommunikationsendeinrichtungen 23 dargestellt, das als Mobilkommunikationssystem ausgeführt ist. Dabei sind die ortsfesten Einrichtungen 21, 22/1 und 22/2 permanent miteinander verbunden. Bestimmungsgemäß wird bedarfsweise eine Verbindung zwischen der tragbaren Kommunikationsendeinrichtung 23 und einer der ortsfesten Einrichtungen 22/1 und 22/2 hergestellt, die eine Funkverbindung mit verschlüsselter Datenübertragung ist.

Die ortsfeste Einrichtung 21 des Kommunikationssystems 2 ist mit der zentralen Einrichtung 11 des Kommunikationssystems 1 zur Übertragung von Buchungsbefehlen verbunden. Diese Verbindung kann permanent oder auf Anforderung temporär geschaltet sein.

Ein nutzerindividueller Buchungsbefehl wird auf der Tastatur der tragbaren Kommunikationsendeinrichtung 23 eingegeben und über die ortsfesten Einrichtungen 22/1 und 21 des Mobilkommunikationssystems 2 an die zentrale Einrichtung 11 des Kommunikationssystems 1 zur Übertragung von Buchungsbefehlen übertragen. Bei vorliegender Zugangsvoraussetzung des Nutzers zum Kommunikationssystem 1 zur Übertragung von Buchungsbefehlen wird der empfangene Buchungsbefehl mit der zentralen Einrichtung 11 vorlegitimiert und als vorlegitimierter Buchungscode über die ortsfesten Einrichtungen 21 und 22/1 des Mobilkommunikationssystems an die tragbare Kommunikationsendeinrichtung 23 übertragen und in der tragbaren Kommunikationsendeinrichtung zumindest temporär zwischengespeichert.

Da die Legitimation des Nutzers bereits beim Zugang zum Mobilkommunikationssystems 2 mehrstufig geprüft wird, ist vorteilhafterweise eine zusätzliche Legitimation des Nutzers gegenüber der zentralen Einrichtung 11 des Kommunikationssystems 1 zur Übertragung von Buchungsbefehlen entbehrlich. Dabei ist als weiterer Vorteil anzusehen, daß sich die Anzahl der durch den Nutzer zu merkenden Zugangs- und Identifizierungsschlüssel verringert, wodurch die Gefahr von Verwechslungen und Fehlidentifizierungen sinkt. Dieses Merkmal ist insbesondere im Hinblick auf die in üblichen Systemen sicherheitstechnisch begründete, eng begrenzte Anzahl von Zugangsversuchen bedeutsam.

Zur tatsächlichen Erlangung einer Ware oder Dienstleistung wird der vorlegitimierte, verschlüsselte Buchungscode, der in der tragbaren Kommunikationsendeinrichtung 23 zwischengespeichert ist, unabhängig vom ersten und zweiten Kommunikationssystem 1 und 2 zur tatsächlichen Buchung an eine dezentrale Einrichtung 12/1 des Kommunikationssystems 1 zur Übertragung von Buchungsbefehlen übertragen.

Dazu ist vorgesehen, daß die tragbare Kommunikationsendeinrichtung 23 des Mobilkommunikationssystems und die dezentrale Einrichtung 12/1 des Kommunikationssystems 1 zur Übertragung von Buchungsbefehlen über eine drahtlose, kurzreichweitige Kommunikationsanordnung untereinander verbindbar sind, wobei die tragbare Kommunikationsendeinrichtung 23 mindestens mit Sendemitteln und die dezentrale Einrichtung 12/1 mindestens mit Empfangsmitteln ausgestattet ist.

In vorteilhafter Ausgestaltung der Erfindung ist diese drahtlose, kurzreichweitige Kommunikationsanordnung durch eine Infrarotverbindung dargestellt. Die dazu erforderlichen technischen Mittel zeichnen sich vorteilhafterweise durch sehr geringe Volumina und Versorgungsanforderungen aus, so daß diese vorteilhaft in bekannte tragbare Kommunikationsendeinrichtungen integrierbar sind.

In alternativer Ausgestaltung der drahtlosen, kurzreichweitigen Kommunikationsanordnung ist vorgesehen, diese als Ultraschallverbindung auszuführen. Die dazu erforderlichen technischen Mittel weisen dieselben vorteilhaften Eigenschaften wie die Infrarotverbindung auf.

In weiterer Ausgestaltung der Erfindung ist vorgesehen, daß der vorlegitimierte, verschlüsselte Buchungscode entsprechend den Algorithmen im Verkehr zwischen den zentralen und dezentralen Einrichtungen 11 und 12/1 bis 12/3 verschlüsselt ist.

Vorteilhafterweise ist der an die dezentrale Einrichtung 12/1 übertragene Buchungscode durch die dezentrale Einrichtung 12/1 direkt verarbeitbar, so als wäre er von der zentralen Einrichtung 11 desselben Kommunikationssystems 1 übertragen worden

In weiterführender Ausgestaltung der Erfindung ist vorgesehen, den vorlegitimierten verschlüsselten Buchungscode entsprechend den Algorithmen im Verkehr zwischen den ortsfesten Einrichtungen 21, 22/1 und 22/2 und den mit diesen verschlüsselt kommunizierenden, tragbaren Kommunikationsendeinrichtungen 23 des Mobilkommunikationssystems 2 verschlüsselt zu übertragen. Mit anderen Worten ist der vorlegitimierte Buchungscode, der bereits unter Anwendung von Mitteln im Kommunikationssystem 1 zur Übertragung von Buchungsbefehlen gemäß diesem System verschlüsselt ist, während seiner Übertragung innerhalb des Mobilkommunikationssystems 2 ein weiteres Mal, also überlagert verschlüsselt.

Vorteilhafterweise wird durch diese doppelte Verschlüsselung der unlegitimierte Zugang zu vorlegitimierten Buchungscodes zumindest erheblich erschwert, so daß aufgrund der weitgehenden Sicherheitsvorkehrungen eine breite Akzeptanz ermöglicht wird.

In der Figur 2 sind ein Kommunikationssystem 100 zur Übertragung von Buchungsbefehlen mit einer zentralen Einrichtung 111 und drei dezentralen Einrichtungen 112/1 bis 112/3 dargestellt.

Weiterhin ist ein zweites Kommunikationssystem 200 mit ortsfesten Einrichtungen 221, 222/1 und 222/2 und tragbaren Kommunikationsendeinrichtungen 223 dargestellt, das als Mobilkommunikationssystem ausgeführt ist. Dabei sind die ortsfesten Einrichtungen 221, 222/1 und 222/2 permanent miteinander verbunden. Bestimmungsgemäß wird bedarfsweise eine Verbindung zwischen der tragbaren Kommunikationsendeinrichtung 223 und einer der ortsfesten Einrichtungen 222/1 und 222/2 hergestellt, die eine Funkverbindung mit verschlüsselter Datenübertragung ist.

Die ortsfeste Einrichtung 221 des zweiten Kommunikationssystems 200 ist mit der zentralen Einrichtung 111 des Kommunikationssystems 100 zur Übertragung von Buchungscodes verbunden. Diese Verbindung kann permanent oder auf Anforderung temporär geschaltet sein.

Ein nutzerindividueller Buchungsbefehl wird auf der Tastatur der tragbaren Kommunikationsendeinrichtung 223 eingegeben und an die dezentrale Einrichtung 112/1 des Kommunikationssystems 100 zur Übertragung von Buchungsbefehlen übertragen, wobei die Erfüllung der Zugangsvoraussetzungen zum zweiten Kommunikationssystem 200 die nutzerindividuelle Legitimation für die Initiierung von Buchungsbefehlen im ersten Kommunikationssystem 100 ist.

Da die Legitimation des Nutzers bereits beim Zugang zum Mobilkommunikationssystems 200 mehrstufig geprüft wird, ist vorteilhafterweise eine zusätzliche Legitimation des Nutzers gegenüber der zentralen Einrichtung 111 des Kommunikationssystems 100 zur Übertragung von Buchungsbefehlen entbehrlich. Dabei ist als weiterer Vorteil anzusehen, daß sich die Anzahl der durch den Nutzer zu merkenden Zugangs- und Identifizierungsschlüssel verringert, wodurch die Gefahr von Verwechslungen und Fehlidentifizierungen sinkt. Dieses Merkmal ist insbesondere im Hinblick auf die in üblichen Systemen sicherheitstechnisch begründete, eng begrenzte Anzahl von Zugangsversuchen bedeutsam.

In der eine dezentrale Einrichtung 112/1 des Kommunikationssystems 100 zur Übertragung von Buchungsbefehlen wird der Buchungsbefehl in einen Buchungscode umgesetzt, der ausgehend von der dezentralen Einrichtungen 112/1 des ersten Kommunikationssystems 100 über die tragbare Kommunikationsendeinrichtung 223 des zweiten Kommunikationssystems 200 zumindest an eine ortsfeste Einrichtung 221 des zweiten Kommunikationssystems 200 übertragen wird. Zur tatsächlichen Erlangung einer Ware oder Dienstleistung genügt die Quittung der ortsfesten Einrichtung 221 über den Empfang des Buchungscodes.

Dabei ist vorgesehen, daß die tragbare Kommunikationsendeinrichtung 223 des Mobilkommunikationssystems und die dezentrale Einrichtung 112/1 des Kommunikationssystems 100 zur Übertragung von Buchungsbefehlen über eine drahtlose, kurzreichweitige Kommunikationsanordnung untereinander verbindbar sind, wobei die tragbare Kommunikationsendeinrichtung 223 und die dezentrale Einrichtung 112/1 jeweils mit Sende- und Empfangsmitteln ausgestattet sind.

In vorteilhafter Ausgestaltung der Erfindung ist diese drahtlose, kurzreichweitige Kommunikationsanordnung durch eine Infrarotverbindung dargestellt. Die dazu erforderlichen technischen Mittel zeichnen sich vorteilhafterweise durch sehr geringe Volumina und Versorgungsanforderungen aus, so daß diese vorteilhaft in bekannte tragbare Kommunikationsendeinrichtungen integrierbar sind.

In alternativer Ausgestaltung der drahtlosen, kurzreichweitigen Kommunikationsanordnung ist vorgesehen, diese als Ultraschallverbindung auszuführen. Die dazu erforderlichen technischen Mittel weisen dieselben vorteilhaften Eigenschaften wie die Infrarotverbindung auf.

In weiterführender Ausgestaltung der Erfindung ist vorgesehen, den legitimierten Buchungscode entsprechend den Algorithmen im Verkehr zwischen den ortsfesten Einrichtungen 221, 222/1 und 222/2 und den mit diesen verschlüsselt kommunizierenden, tragbaren Kommunikationsendeinrichtungen 223 des Mobilkommunikationssystems 200 verschlüsselt zu übertragen, so daß aufgrund der weitgehenden Sicherheitsvorkehrungen eine breite Akzeptanz ermöglicht wird.

Darüber hinaus ist vorgesehen, die ortsfesten Einrichtungen 221, 222/1, 222/2 des zweiten Kommunikationssystems 200 in zentrale ortsfeste Einrichtungen 221 und dezentrale ortsfeste Einrichtungen 222/1, 222/2 einzuteilen und die zentralen ortsfesten Einrichtungen 221 mit Mitteln zur saldierenden Speicherung von Buchungscodes auszustatten. In vorzugsweise zu verwendenden Mobilkommunikationssystemen sind diese Mittel zur saldierenden Speicherung von Buchungscodes vorteilhaft in die vorimplementierten Mittel zur nutzerindividuellen Abrechnung der Inanspruchnahme der Dienste des Mobilkommunikationssystems integrierbar.

### Bezugszeichenliste

- 1: Kommunikationssystem zur Übertragung von Buchungsbefehlen
- 11: zentrale Einrichtung
- 12/1 bis 12/3: dezentrale Einrichtungen
- 2: zweites Kommunikationssystem
- 21, 22/1, 22/2: ortsfeste Einrichtungen
- 23: tragbare Kommunikationsendeinrichtung
- 100: Kommunikationssystem zur Übertragung von Buchungsbefehlen
- 111: zentrale Einrichtung
- 112/1 bis 112/3: dezentrale Einrichtungen
- 200: zweites Kommunikationssystem
- 221, 222/1, 222/2: ortsfeste Einrichtungen
- 223: tragbare Kommunikationsendeinrichtung

## Patentansprüche

1. Kommunikationssystem zur Übertragung von Buchungsbefehlen, das zentrale und dezentrale Einrichtungen umfaßt, wobei an dezentralen Einrichtungen eingebbare, nutzerindividuelle Buchungsbefehle auf ihre Legitimation geprüft und an zentrale Einrichtungen zur Verarbeitung weitergeleitet werden,
- wobei untereinander zumindest virtuell vemetzte Einrichtungen vorgesehen sind,
- wobei Mittel eines unabhängigen zweiten Kommunikationssystems (2) mit ortsfesten Einrichtungen (21, 22/1, 22/2) und mit diesen verschlüsselt kommunizierenden, tragbaren Kommunikationsendeinrichtungen (23) vorgesehen sind,
- wobei die ortsfesten Einrichtungen (21, 22/1, 22/2) des zweiten Kommunikationssystems (2) mit den zentralen Einrichtungen (11) des ersten Kommunikationssystems (1) zumindest temporär verbindbar sind,
- daß mit den tragbaren Kommunikationsendeinrichtungen (23) des zweiten Kommunikationssystems (2) nutzerindividuelle Buchungsbefehle in einer der zentralen Einrichtungen (11) des ersten Kommunikationssystems (1) vorlegitimierbar sind,
dadurch gekennzeichnet,
- daß ein vorlegitimierter verschlüsselter Buchungscode zumindest temporär in den tragbaren Kommunikationsendeinrichtungen (23) des zweiten Kommunikationssystems (2) speicherbar ist und
- daß der vorlegtimierte verschlüsselte Buchungscode unabhängig vom ersten und zweiten Kommunikationssystem (1, 2) zur tatsächlichen Buchung an eine dezentrale Einrichtung (12/1 bis 12/3) des ersten Kommunikationssystems (1) übertragbar ist.

2. Kommunikationssystem nach Anspruch 1
**dadurch gekennzeichnet,**
daß die Kommunikationsendeinrichtungen (23) des zweiten Kommunikationssystems (2) und die dezentrale Einrichtung (12/1 bis 12/3) des ersten Kommunikationssystems (1) über eine drahtlose, kurzreichweitige Kommunikationsanordnung miteinander verbindbar sind, wobei die Kommunikationsendeinrichtungen (23) mindestens mit Sendemitteln und die dezentrale Einrichtung (12/1 bis 12/3) mindestens mit Empfangsmitteln ausgestattet ist.

3. Kommunikationssystem nach Anspruch 2
**dadurch gekennzeichnet,**
daß die drahtlose, kurzreichweitige Kommunikationsanordnung durch eine Infrarotverbindung dargestellt ist.

4. Kommunikationssystem nach Anspruch 2
**dadurch gekennzeichnet,**
daß die drahtlose, kurzreichweitige Kommunikationsanordnung durch eine Ultraschallverbindung dargestellt ist.

5. Kommunikationssystem nach Anspruch 1
**dadurch gekennzeichnet,**
daß der vorlegtimierte verschlüsselte Buchungscode entsprechend den Algorithmen im Verkehr zwischen den zentralen und dezentralen Einrichtungen des ersten Kommunikationssystems (11 und 12/1 bis 12/3) verschlüsselt ist.

6. Kommunikationssystem nach den Ansprüchen 1 und 5
**dadurch gekennzeichnet,**
daß der voriegitimierte verschlüsselte Buchungscode entsprechend den Algorithmen im Verkehr zwischen den ortsfesten Einrichtungen (21, 22/1, 22/2) und mit diesen verschlüsselt kommunizierenden, tragbaren Kommunikationsendeinrichtungen (23) des zweiten Kommunikationssystems (2) verschlüsselt übertragbar ist.

7. Kommunikationssystem zur Übertragung von Buchungsbefehlen, das zentrale und dezentrale Einrichtungen umfaßt, wobei an dezentralen Einrichtungen eingebbare, nutzerindividuelle Buchungsbefehle auf ihre Legitimation geprüft und an zentrale Einrichtungen zur Verarbeitung weitergeleitet werden,
- wobei Mittel eines unabhängigen zweiten Kommunikationssystems (200) mit ortsfesten Einrichtungen (221, 222/1, 222/2) und mit diesen verschlüsselt kommunizierenden, tragbaren Kommunikationsendeinrichtungen (223) vorgesehen sind,
- wobei die ortsfesten Einrichtungen (221, 222/1, 222/2) des zweiten Kommunikationssystems (200) mit den zentralen Einrichtungen (111) des ersten Kommunikationssystems (100) zumindest temporär verbindbar sind,
dadurch gekennzeichnet,
- daß mit den tragbaren Kommunikationsendeinrichtungen (223) des zweiten Kommunikationssystems (200) nutzerindividuelle Buchungsbefehle in einer der
- dezentralen Einrichtungen (112/1 bis 112/3) des ersten Kommunikationssystems (100) initiierbar sind, wobei die Erfüllung der Zugangsvoraussetzungen zum zweiten Kommunikationssystem (200) die nutzerindividuelle Legitimation für die Initiierung von Buchungsbefehlen im ersten Kommunikationssystem (100) ist,
- daß die initiierten und legitimierten Buchungsbefehle als Buchungscode ausgehend von den dezentralen Einrichtungen (112/1 bis 112/3) des ersten Kommunikationssystems (100) über die tragbare Kommunikationsendeinrichtung (223) des zweiten Kommunikationssystems (200) zumindest an eine ortsfeste Einrichtung (221) des zweiten Kommunikationssystems (200) übertragbar sind und
- daß die Buchungscodes von der ortsfesten Einrichtung (221) des zweiten Kommunikationssystems (200) zur tatsächlichen Buchung an die zentrale Einrichtung (111) des ersten Kommunikationssystems (100) übertragbar sind.

8. Kommunikationssystem nach Anspruch 7
**dadurch gekennzeichnet,**
daß die Kommunikationsendeinrichtungen (223) des zweiten Kommunikationssystems (200) und die dezentrale Einrichtung (112/1 bis 112/3) des ersten Kommunikationssystems (100) über eine drahtlose, kurzreichweitige Kommunikationsanordnung miteinander verbindbar sind, wobei die Kommunikationsendeinrichtungen (223) und die dezentrale Einrichtung (112/1 bis 112/3) jeweils mit Sende- und Empfangsmitteln ausgestattet sind.

9. Kommunikationssystem nach Anspruch 8
**dadurch gekennzeichnet,**
daß die drahtlose, kurzreichweitige Kommunikationsanordnung durch eine Infrarotverbindung dargestellt ist.

10. Kommunikationssystem nach Anspruch 8
**dadurch gekennzeichnet,**
daß die drahtlose, kurzreichweitige Kommunikationsanordnung durch eine Ultraschallverbindung dargestellt ist.

11. Kommunikationssystem nach Anspruch 7
**dadurch gekennzeichnet,**
daß der vorlegitimierte verschlüsselte Buchungscode entsprechend den Algorithmen im Verkehr zwischen den ortsfesten Einrichtungen (221, 222/1, 222/2) und mit diesen verschlüsselt kommunizierenden, tragbaren Kommunikationsendeinrichtungen (223) des zweiten Kommunikationssystems (200) verschlüsselt übertragbar ist.

12. Kommunikationssystem nach den Ansprüchen 7 und 11
**dadurch gekennzeichnet,**
daß die ortsfesten Einrichtungen (221, 222/1, 222/2) des zweiten Kommunikationssystems (200) in zentrale ortsfeste Einrichtungen (221) und dezentrale ortsfeste Einrichtungen (222/1, 222/2) eingeteilt sind und daß die zentralen ortsfesten Einrichtungen (221) Mittel zur saldierenden Speicherung von Buchungscodes umfassen.

## Claims

1. A communication system for transmitting accounting instructions, which comprises centralised and decentralised devices, wherein accounting instructions which can be entered by individual users in decentralised devices are checked for authenticity and are passed on to centralised devices for processing,
- wherein devices which are at least virtually networked with each other are provided,
- wherein means of an independent second communication system (2) with non-portable devices (21, 22/1, 22/2) and portable communication transmitters (23) which communicate in encrypted manner therewith are provided,
- wherein the non-portable devices (21, 22/1, 22/2) of the second communication system (2) can be connected at least temporarily with the centralised devices (11) of the first communication system (1),
- with the portable communication transmitters (23) of the second communication system (2) accounting instructions from individual users are able to be pre-authenticated in one of the centralised devices (11) of the first communication system (1),
characterised in that
- a pre-authenticated, encrypted accounting code can be stored at least temporarily in the portable communication transmitters (23) of the second communication system (2) and
- the pre-authenticated, encrypted accounting code, independently of the first and second communication systems (1, 2), can be transmitted to a decentralised device (12/1 to 12/3) of the first communication system (1) for actual accounting.

2. A communication system according to Claim 1, characterised in that the communication transmitters (23) of the second communication system (2) and the decentralised device (12/1 to 12/3) of the first communication system (1) can be connected together via a wireless, short-range communication arrangement, the communication transmitters (23) being equipped at least with sending means and the decentralised device (12/1 to 12/3) being equipped at least with receiving means.

3. A communication system according to Claim 2, characterised in that the wireless, short-range communication arrangement is represented by an infrared connection.

4. A communication system according to Claim 2, characterised in that the wireless, short-range communication arrangement is represented by an ultrasound connection.

5. A communication system according to Claim 1, characterised in that the pre-authenticated, encrypted accounting code is encrypted corresponding to the algorithms circulating between the centralised and decentralised devices (11 and 12/1 to 12/3) of the first communication system.

6. A communication system according to Claims 1 and 5, characterised in that the pre-authenticated, encrypted accounting code can be transferred in encrypted manner corresponding to the algorithms circulating between the non-portable devices (21, 22/1, 22/2) and portable communication transmitters (23) of the second communication system (2) which communicate in encrypted manner therewith.

7. A communication system for transmitting accounting instructions, which comprises centralised and decentralised devices, wherein accounting instructions which can be entered by individual users in decentralised devices are checked for authenticity and are passed on to centralised devices for processing,
- wherein means of an independent second communication system (200) with non-portable devices (221, 222/1, 222/2) and portable communication transmitters (223) which communicate in encrypted manner therewith are provided,
- wherein the non-portable devices (221, 222/1, 222/2) of the second communication system (200) can be connected at least temporarily with the centralised devices (111) of the first communication system (100),
characterised in that
- with the portable communication transmitters (223) of the second communication system (200) accounting instructions from individual users can be initiated in one of the decentralised devices (112/1 to 112/3) of the first communication system (100), the meeting of the access requirements to the second communication system (200) being the user-individual authentication for the initiation of accounting instructions in the first communication system (100),
- that the initiated, authenticated accounting instructions can be transmitted as accounting code starting from the decentralised devices (112/1 to 112/3) of the first communication system (100) via the portable communication transmitter (223) of the second communication system (200) at least to one non-portable device (221) of the second communication system (200), and
- that the accounting codes can be transmitted from the non-portable device (221) of the second communication system (200) to the centralised device (111) of the first communication system (100) for actual accounting.

8. A communication system according to Claim 7, characterised in that the communication transmitters (223) of the second communication system (200) and the decentralised device (112/1 to 112/3) of the first communication system (100) can be connected together via a wireless, short-range communication arrangement, the communication transmitters (223) and the decentralised device (112/1 to 112/3) each being equipped with sending and receiving means.

9. A communication system according to Claim 8, characterised in that the wireless, short-range communication arrangement is represented by an infrared connection.

10. A communication system according to Claim 8, characterised in that the wireless, short-range communication arrangement is represented by an ultrasound connection.

11. A communication system according to Claim 7, characterised in that the pre-authenticated, encrypted accounting code is encrypted corresponding to the algorithms circulating between the non-portable devices (221, 222/1, 222/2) and portable communication transmitters (223) of the second communication system (200) which communicate in encrypted manner therewith.

12. A communication system according to Claims 7 and 11, characterised in that the non-portable devices (221, 222/1, 222/2) of the second communication system (200) are divided into centralised non-portable devices (221) and decentralised non-portable devices (222/1, 222/2) and that the central non-portable devices (221) comprise means for the balancing storage of accounting codes.

## Revendications

1. Système de communication pour transmettre des ordres comptables, qui comporte des dispositifs centraux et décentralisés, des ordres comptables, individuels à des utilisateurs, pouvant être entrés au niveau des dispositifs décentralisés étant vérifiés concernant leur authentification et étant retransmis aux dispositifs centraux pour le traitement,
- des dispositifs au moins virtuellement en réseau les uns par rapport aux autres étant prévus,
- des moyens d'un second système de communication indépendant (2) ayant des dispositifs fixes (21, 22/1, 22/2) et des dispositifs finals de communication portables (23), communiquant de façon cryptée avec ceux-ci, étant prévus,
- les dispositifs fixes (21, 22/1, 22/2) du second système de communication pouvant être reliés, au moins de façon temporaire, aux dispositifs centraux (11) du premier système de communication (1),
- des ordres comptables individuels à des utilisateurs, par les dispositifs finals de communication portables (23) du second système de communication (2), pouvant être préalablement authentifiés, dans un des dispositifs centraux (11) du premier système de communication (1),
caractérisé en ce que :
- un code comptable crypté préalablement authentifié peut être mémorisé, au moins de façon temporaire, dans les dispositifs finals de communication portables (23) du second système de communication (2), et
- le code comptable crypté préauthentifié peut être transmis, indépendamment des premier et second systèmes de communication (1, 2), pour la comptabilisation effective à un dispositif décentralisé (12/1 à 12/3) du premier système de communication (1).

2. Système de communication selon la revendication 1, caractérisé en ce que les dispositifs finals de communication (23) du second système de communication (2) et le dispositif décentralisé (12/1 à 12/3) du premier système de communication (1) peuvent être reliés ensemble par l'intermédiaire d'un agencement de communication sans fil à courte portée, les dispositifs finals de communication (23) comportant au moins des moyens d'émission et le dispositif décentralisé (12/1 à 12/3) au moins des moyens de réception.

3. Système de communication selon la revendication 2, caractérisé en ce que l'agencement de communication sans fil à courte portée est constitué par une liaison infrarouge.

4. Système de communication selon la revendication 2, caractérisé en ce que l'agencement de communication sans fil à courte portée est constitué par une liaison à ultrasons.

5. Système de communication selon la revendication 1, caractérisé en ce que le code comptable crypté préauthentifié est crypté de façon correspondant aux algorithmes en circulation entre les dispositifs centraux et décentralisés du premier système de communication (11 et 12/1 à 12/3).

6. Système de communication selon les revendications 1 et 5, caractérisé en ce que le code comptable crypté préauthentifié peut être transmis de façon cryptée de façon correspondant aux algorithmes en circulation entre les dispositifs fixes (21, 22/1, 22/2) et des dispositifs finals de communication portables (23), communiquant de façon cryptée avec ceux-ci, du second système de communication (2).

7. Système de communication pour transmettre des ordres comptables, qui comporte des dispositifs centraux et décentralisés, des ordres comptables, individuels à des utilisateurs, pouvant être entrés au niveau des dispositifs décentralisés étant vérifiés concernant leur authentification et étant retransmis aux dispositifs centraux pour le traitement,
- des moyens d'un second système de communication indépendant (200) ayant des dispositifs fixes (221, 222/1, 222/2) et des dispositifs finals de communication portables (223), communiquant de façon cryptée avec ceux-ci, étant prévus,
- les dispositifs fixes (221, 222/1, 222/2) du second système de communication (200) pouvant être reliés, au moins de façon temporaire, aux dispositifs centraux (111) du premier système de communication (100),
caractérisé en ce que :
- des ordres comptables individuels à des utilisateurs, par les dispositifs finals de communication portables (223) du second système de communication (200), peuvent être initiés dans un des dispositifs décentralisés (112/1 à 112/3) du premier système de communication (100), le fait de remplir les conditions d'accès au second système de communication (200) constituant l'authentification individuelle à l'utilisateur pour l'initiation d'ordres comptables dans le premier système de communication (100),
- les ordres comptables initiés et authentifiés peuvent être transmis, comme code comptable, à partir des dispositifs décentralisés (112/1 à 112/3) du premier système de communication (100) par l'intermédiaire du dispositif final de communication portable (223) du second système de communication (200) au moins à un dispositif fixe (221) du second système de communication (200), et
- les codes comptables peuvent être transmis du dispositif fixe (221) du second système de communication (200), pour la comptabilisation effective, au dispositif central (111) du premier système de communication (100).

8. Système de communication selon la revendication 7, caractérisé en ce que les dispositifs finals de communication (223) du second système de communication (200) et le dispositif décentralisé (112/1 à 112/3) du premier système de communication (100) peuvent être reliés ensemble par l'intermédiaire d'un agencement de communication sans fil à courte portée, les dispositifs finals de communication (223) et le dispositif décentralisé (112/1 à 112/3) présentant, à chaque fois, des moyens d'émission et de réception.

9. Système de communication selon la revendication 8, caractérisé en ce que l'agencement de communication sans fil à courte portée est constitué par une liaison infrarouge.

10. Système de communication selon la revendication 8, caractérisé en ce que l'agencement de communication sans fil à courte portée est constitué par une liaison à ultrasons.

11. Système de communication selon la revendication 7, caractérisé en ce que le code comptable crypté préauthentifié peut être transmis de façon cryptée de façon correspondant aux algorithmes en circulation entre les dispositifs fixes (221, 222/1, 222/2) et des dispositifs finals de communication portables (223), communiquant de façon cryptée avec ceux-ci, du second système de communication (200).

12. Système de communication selon les revendications 7 et 11, caractérisé en ce que les dispositifs fixes (221, 222/1, 222/2) du second système de communication (200) sont partagés en dispositifs centraux fixes (221) et en dispositifs décentralisés fixes (222/1, 222/2), et en ce que les dispositifs centraux fixes (221) comportent des moyens pour mémoriser de façon totalisatrice des codes comptables.
